# EUROPEAN PATENT APPLICATION

(11) **EP 4 270 539 A1**
(43) Date of publication of application: **01.11.2023**
(21) Application number: 22750080.8
(22) Date of filing: 07.02.2022
(51) Int. Cl.: H01M 4/36, H01M 4/525, H01M 4/505, H01M 10/052, C01G 53/00, C01G 51/00, H01M 4/02

(54) **POSITIVE ELECTRODE ACTIVE MATERIAL FOR LITHIUM SECONDARY BATTERY, METHOD FOR PREPARING SAME, AND LITHIUM SECONDARY BATTERY COMPRISING SAME**

(30) Priority: 05.02.2021 KR 20210017095
(71) Applicant: LG Energy Solution, Ltd., Seoul 07335 (KR)
(72) Inventor: HEO, Jong-Wook, Daejeon 34122 (KR); KIM, Ji-Hye, Daejeon 34122 (KR); YOO, Tae-Gu, Daejeon 34122 (KR); JUNG, Wang-Mo, Daejeon 34122 (KR); JUNG, Hae-Jung, Daejeon 34122 (KR); JO, Chi-Ho, Daejeon 34122 (KR)
(74) Representative: Hoffmann Eitle
(86) International application number: PCT/KR2022/001850
(87) International publication number: WO 2022/169331

(57) **Abstract**

The present disclosure discloses a positive electrode active material for a lithium secondary battery comprising a secondary particle having an average particle size (D50) of 1 to 15 *µ*m, formed by agglomeration of at least two primary macro particles having an average particle size (D50) of 0.1 to 3 *µ*m; and a coating layer of a lithium-metal oxide on a surface of the secondary particle, wherein the primary particles are represented by LiₐNi_{1-x-y}CoₓM1_{y}M2_{w}O₂ (1.0≤a≤1.5, 0≤x≤0.2, 0≤y≤0.2, 0≤w≤0.1, 0≤x+y≤0.2, M1 includes at least one type of metal of Mn or Al, and M2 includes at least one type of metal selected from the group consisting of Ba, Ca, Zr, Ti, Mg, Ta, Nb and Mo), and wherein the lithium-metal oxide is a low-temperature phase LiₓCoO₂ (0<x≤1) having at least one of a spinel structure (Fd-3m) or a disordered rock-salt structure (Fm-em).

## Description

### TECHNICAL FIELD

The present disclosure relates to a positive electrode active material for a lithium secondary battery comprising primary macro particles of high-Ni lithium transition metal oxide and a method for preparing the same.

The present application claims priority to Korean Patent Application No. 10-2021-0017095 filed on February 5, 2021, in the Republic of Korea, the disclosure of which is incorporated herein by reference.

### BACKGROUND ART

Recently, with the widespread use of electronic devices using batteries, for example, mobile phones, laptop computers and electric vehicles, there is a fast growing demand for secondary batteries with small size, light weight and relatively high capacity. In particular, lithium secondary batteries are gaining attention as a power source for driving mobile devices due to their light weight and high energy density advantages. Accordingly, there are many efforts to improve the performance of lithium secondary batteries.

A lithium secondary battery includes an organic electrolyte solution or a polymer electrolyte solution filled between a positive electrode and a negative electrode made of an active material capable of intercalating and deintercalating lithium ions, and electrical energy is produced by oxidation and reduction reactions during intercalation/deintercalation of lithium ions at the positive electrode and the negative electrode.

The positive electrode active material of the lithium secondary battery includes lithium cobalt oxide (LiCoO₂), nickel-based lithium transition metal oxide, lithium manganese oxide (LiMnO₂ or LiMn₂O₄) and a lithium iron phosphate compound (LiFePO₄). Among them, lithium cobalt oxide (LiCoO₂) is widely used due to its high operating voltage and large capacity advantages, and is used as a positive electrode active material for high voltage. However, cobalt (Co) has a limitation on the use in a large amount as a power source in the field of electric vehicles due to its price rise and unstable supply, and thus there is a need for development of an alternative positive electrode active material.

Accordingly, nickel-based lithium transition metal oxide with partial substitution of nickel (Ni) for cobalt (Co), typically, nickel cobalt manganese based lithium composite transition metal oxide (hereinafter simply referred to as 'NCM based lithium composite transition metal oxide') has been developed.

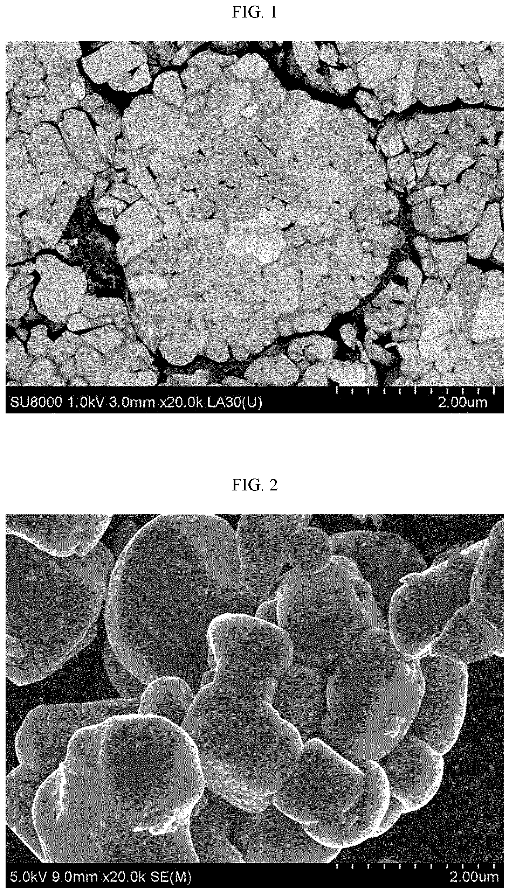

Meanwhile, the conventional nickel-based lithium transition metal oxide is in the form of a secondary particle formed by agglomeration of primary micro particles having a small average particle size D50 as shown in FIG. 1, and has a large specific surface area and a low particle strength. Accordingly, when the positive electrode active material comprising secondary particles formed by agglomeration of primary micro particles as shown in FIG. 1 is used to manufacture an electrode, followed by a rolling process, a large amount of gas is produced during the cell operation due to severe particle cracking, resulting in low stability. In particular, high-Ni lithium transition metal oxide having high nickel content to ensure high capacity has a further reduction in chemical stability due to its structural problem, and it is difficult to ensure thermal stability.

To overcome the disadvantage of the conventional nickel-based lithium transition metal oxide in the form of a secondary particle formed by agglomeration of primary micro particles, a nickel-based lithium transition metal oxide positive electrode active material in the form of a secondary particle formed by agglomeration of primary macro particles having a large average particle size D50 has been proposed.

The nickel-based lithium transition metal oxide positive electrode active material in the form of a secondary particle formed by agglomeration of primary macro particles reduces the problems with thermal stability, life shortening caused by side reactions during electrochemical reactions and gas generation due to the minimal interface of the secondary particles.

Meanwhile, in general, the high-Ni lithium transition metal oxide positive electrode active material undergoes a washing process to reduce the amount of lithium impurities remaining on the surface. The washing process removes lithium by-products on the surface, thereby reducing the gas generation, but the life is shortened by surface damage of the positive electrode active material particles. In particular, the nickel-based lithium transition metal oxide positive electrode active material in the form of a secondary particle formed by agglomeration of primary macro particles intrinsically has short life characteristics, and the life characteristics get worse after the washing process, and moreover, the resistance increases in charge/discharge cycles.

### DISCLOSURE

### Technical Problem

According to an embodiment of the present disclosure, the present disclosure is directed to providing a nickel-based lithium transition metal oxide positive electrode active material with improved life characteristics in the form of a secondary particle formed by agglomeration of primary macro particles.

According to another embodiment of the present disclosure, the present disclosure is further directed to providing a nickel-based lithium transition metal oxide positive electrode active material in the form of a secondary particle formed by agglomeration of primary macro particles for reducing the rise in resistance during charging/discharging.

According to still another embodiment of the present disclosure, the present disclosure is further directed to providing a method for preparing a nickel-based lithium transition metal oxide positive electrode active material with improved life characteristics in the form of a secondary particle formed by agglomeration of primary macro particles.

According to yet another embodiment of the present disclosure, the present disclosure is further directed to providing a method for preparing a nickel-based lithium transition metal oxide positive electrode active material in the form of a secondary particle formed by agglomeration of primary macro particles for reducing the rise in resistance during charging/discharging.

According to a further another embodiment of the present disclosure, the present disclosure is further directed to providing a positive electrode and a lithium secondary battery comprising the nickel-based lithium transition metal oxide positive electrode active material having the above-described features.

### Technical Solution

In one aspect of the present disclosure, there is provided a positive electrode active material for a lithium secondary battery according to the following embodiments.

A first embodiment relates to the positive electrode active material for a lithium secondary battery comprising a secondary particle having an average particle size D50 of 1 to 15 *µ*m, formed by agglomeration of at least two primary macro particles having an average particle size D50 of 0.1 to 3 *µ*m; and a coating layer of a lithium-metal oxide on a surface of the secondary particle, wherein the primary particles are represented by LiₐNi_{1-x-y}CoₓM1_{y}M2_{w}O₂ (1.0≤a≤1.5, 0≤x≤0.2, 0≤y≤0.2, 0≤w≤0.1, 0≤x+y≤0.2, M1 includes at least one type of metal of Mn or Al, and M2 includes at least one type of metal selected from the group consisting of Ba, Ca, Zr, Ti, Mg, Ta, Nb and Mo), and wherein the lithium-metal oxide is a low-temperature phase LiₓCoO₂ (0<x≤1) having at least one of a spinel structure (Fd-3m) or a disordered rock-salt structure (Fm-em).

A second embodiment relates to the positive electrode active material for a lithium secondary battery according to the first embodiment, wherein the lithium-metal oxide has the spinel structure (Fd-3m).

A third embodiment relates to the positive electrode active material for a lithium secondary battery according to the first or second embodiment, wherein the average particle size D50 of the primary macro particles is 1 to 3 *µ*m, and the average particle size D50 of the secondary particle is 3 to 10 *µ*m.

A fourth embodiment relates to the positive electrode active material for a lithium secondary battery according to any one of the first to third embodiments, wherein the coating layer is present in an amount of 0.05 to 3 parts by weight based on 100 parts by weight of the secondary particle.

A fifth embodiment relates to the positive electrode active material for a lithium secondary battery according to any one of the first to fourth embodiments, wherein an average crystallite size of the primary macro particles is 130 nm or more.

A sixth embodiment relates to the positive electrode active material for a lithium secondary battery according to any one of the first to fifth embodiments, wherein a lithium impurity of the positive electrode active material for a lithium secondary battery is present in an amount of 0.7 weight% or less.

In another aspect of the present disclosure, there is provided a method for preparing a positive electrode active material for a lithium secondary battery according to the following embodiments.

A seventh embodiment relates to the method for preparing a positive electrode active material for a lithium secondary battery comprising (S1) preparing a secondary particle having an average particle size D50 of 1 to 15 *µ*m, formed by agglomeration of at least two primary macro particles having an average particle size D50 of 0.1 to 3 *µ*m, represented by LiₐNi_{1-x-y}CoₓM1_{y}M2_{w}O₂ (1.0≤a≤1.5, 0≤x≤0.2, 0≤y≤0.2, 0≤w≤0.1, 0≤x+y≤0.2, M1 includes at least one type of metal of Mn or Al, and M2 includes at least one type of metal selected from the group consisting of Ba, Ca, Zr, Ti, Mg, Ta, Nb and Mo); and (S2) mixing a cobalt source with the secondary particle and sintering to form a coating layer on a surface of the secondary particle, the coating layer of a low-temperature phase LiₓCoO₂ (0<x≤1) having at least one of a spinel structure (Fd-3m) or a disordered rock-salt structure (Fm-em), formed by reaction between a lithium impurity contained on the surface of the secondary particle and the cobalt source, wherein the method does not comprise a washing process between the step (S1) and the step (S2).

An eighth embodiment relates to the method for preparing a positive electrode active material for a lithium secondary battery according to the seventh embodiment, wherein the average particle size D50 of the primary macro particles is 1 to 3 *µ*m, and the average particle size D50 of the secondary particle is 3 to 10 *µ*m.

A ninth embodiment relates to the method for preparing a positive electrode active material for a lithium secondary battery according to the seventh or eighth embodiment, wherein the cobalt source includes at least one selected from the group consisting of a cobalt oxide and a cobalt hydroxide.

A tenth embodiment relates to the method for preparing a positive electrode active material for a lithium secondary battery according to any one of the seventh to ninth embodiments, wherein the cobalt source includes at least one selected from the group consisting of CoO, Co₃O₄ and Co(OH)₂.

An eleventh embodiment relates to the method for preparing a positive electrode active material for a lithium secondary battery according to any one of the seventh to tenth embodiments, wherein the cobalt source is mixed at an equivalence ratio of Li:Co of 0.6 to 1 with an amount of lithium contained in the lithium impurity.

A twelfth embodiment relates to the method for preparing a positive electrode active material for a lithium secondary battery according to any one of the seventh to eleventh embodiments, wherein the lithium impurity of the positive electrode active material for a lithium secondary battery is present in an amount of 0.7 weight% or less.

A thirteenth embodiment provides a positive electrode for a lithium secondary battery comprising the above-described positive electrode active material.

A fourteenth embodiment provides a lithium secondary battery comprising the above-described positive electrode.

### Advantageous Effects

According to an embodiment of the present disclosure, with the lithium-cobalt oxide coating layer, it is possible to improve the life characteristics of the lithium secondary battery comprising the nickel-based lithium transition metal oxide positive electrode active material in the form of a secondary particle formed by agglomeration of primary macro particles.

Additionally, according to another embodiment of the present disclosure, with the lithium-cobalt oxide coating layer of the specific structure, it is possible to reduce the rise in resistance the lithium secondary battery comprising the nickel-based lithium transition metal oxide positive electrode active material in the form of a secondary particle formed by agglomeration of primary macro particles during charging/discharging.

### DESCRIPTION OF DRAWINGS

The accompanying drawings illustrate exemplary embodiments of the present disclosure, and together with the above description, serve to help a further understanding of the technical aspects of the present disclosure, so the present disclosure should not be construed as being limited to the drawings. Meanwhile, the shape, size, scale or proportion of the elements in the accompanying drawings may be exaggerated to emphasize a more clear description.
FIG. 1 is a scanning electron microscope (SEM) image of a conventional secondary particle having the average particle size D50 of 5 *µ*m, formed by agglomeration of primary micro particles.
FIG. 2 is an SEM image of a positive electrode active material for a lithium secondary battery prepared according to example 1.
FIG. 3 is an electron probe microanalysis (EPMA) image of Co distribution of positive electrode active material particles for a lithium secondary battery prepared according to example 1.
FIG. 4 shows a TEM SAED pattern of a coating layer of a positive electrode active material for a lithium secondary battery prepared according to example 1.

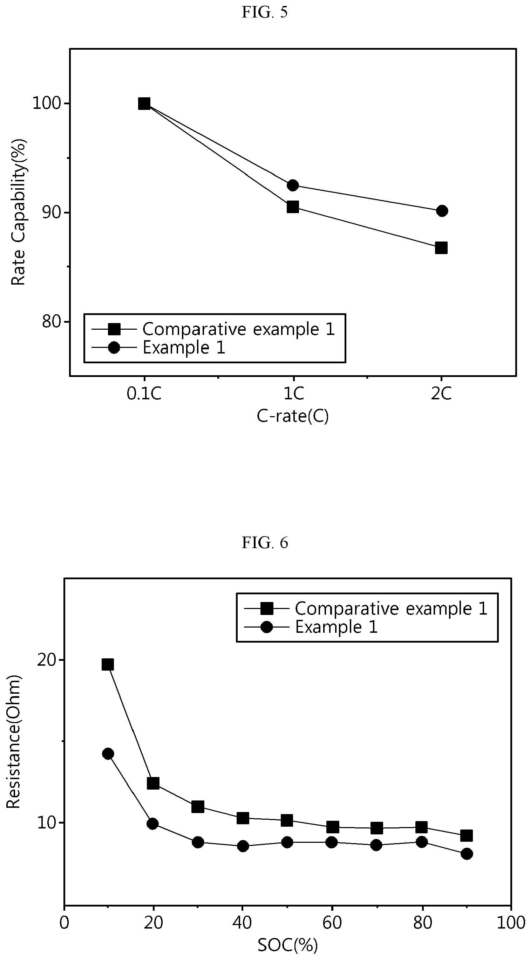

FIG. 5 is a graph showing life characteristics results of batteries comprising a positive electrode active material for a lithium secondary battery prepared according to example 1 and a positive electrode active material for a lithium secondary battery prepared according to comparative example 1.
FIG. 6 is a graph showing initial resistance measurement results of batteries comprising a positive electrode active material for a lithium secondary battery prepared according to example 1 and a positive electrode active material for a lithium secondary battery prepared according to comparative example 1.

### BEST MODE

Hereinafter, embodiments of the present disclosure will be described in detail. Prior to the description, it should be understood that the terms or words used in the specification and the appended claims should not be construed as limited to general and dictionary meanings, but interpreted based on the meanings and concepts corresponding to technical aspects of the present disclosure, on the basis of the principle that the inventor is allowed to define terms appropriately for the best explanation. Therefore, the disclosure of the embodiments described herein is just a most preferred embodiment of the present disclosure, but not intended to fully describe the technical aspects of the present disclosure, so it should be understood that a variety of other equivalents and modifications could have been made thereto at the time that the application was filed.

Unless the context clearly indicates otherwise, it will be understood that the term "comprises" when used in this specification, specifies the presence of stated elements, but does not preclude the presence or addition of one or more other elements.

In the specification and the appended claims, "comprising multiple crystal grains" refers to a crystal structure formed by two or more crystal grains having a specific range of average crystallite sizes. In this instance, the crystallite size of the crystal grain may be quantitatively analyzed using X-ray diffraction analysis (XRD) by Cu Kα X-ray (Xrα). Specifically, the average crystallite size of the crystal grain may be quantitatively analyzed by putting a prepared particle into a holder and analyzing diffraction grating for X-ray radiation onto the particle.

In the specification and the appended claims, D50 may be defined as a particle size at 50% of particle size distribution, and may be measured using a laser diffraction method. For example, a method for measuring the average particle size D50 of a positive electrode active material may include dispersing particles of the positive electrode active material in a dispersion medium, introducing into a commercially available laser diffraction particle size measurement device (for example, Microtrac MT 3000), irradiating ultrasound of about 28 kHz with the output power of 60W, and calculating the average particle size D50 corresponding to 50% of cumulative volume in the measurement device.

In the present disclosure, 'primary particle' refers to a particle having seemingly absent grain boundary when observed with the field of view of 5000 to 20000 magnification using a scanning electron microscope.

In the present disclosure, 'secondary particle' is a particle formed by agglomeration of the primary particles.

In the present disclosure, 'monolith' refers to a particle that exists independently of the secondary particle, and has seemingly absent grain boundary, and for example, it is a particle having the particle diameter of 0.5 *µ*m or more.

In the present disclosure, 'particle' may include any one of the monolith, the secondary particle and the primary particle or all of them.

According to an aspect of the present disclosure, there is provided a positive electrode active material for a lithium secondary battery, comprising:
a secondary particle having the average particle size D50 of 1 to 15 *µ*m, formed by agglomeration of at least two primary macro particles having the average particle size D50 of 0.1 to 3 *µ*m; and
a coating layer of lithium-metal oxide on a surface of the secondary particle,
wherein the primary particles are represented by LiₐNi_{1-x-y}CoₓM1_{y}M2_{w}O₂ (1.0≤a≤1.5, 0≤x≤0.2, 0≤y≤0.2, 0≤w≤0.1, 0≤x+y≤0.2, M1 includes at least one type of metal of Mn or Al, and M2 includes at least one type of metal selected from the group consisting of Ba, Ca, Zr, Ti, Mg, Ta, Nb and Mo), and
wherein the lithium-metal oxide is low-temperature phase LiₓCoO₂ (0<x≤1) having at least one of a spinel structure (Fd-3m) or a disordered rock-salt structure (Fm-em).

### Primary macro particle

In general, nickel-based lithium transition metal oxide is a secondary particle. The secondary particle may be an agglomerate of primary particles.

Specifically, a dense nickel-based transition metal hydroxide secondary particle prepared by the coprecipitation method is used as a precursor, and the precursor is mixed with a lithium precursor and sintered at the temperature of less than 960°C to obtain a nickel-based lithium transition metal oxide secondary particle formed by agglomeration of primary micro particles. The conventional secondary particle is shown in FIG. 1. However, when a positive electrode active material comprising the conventional secondary particles is coated on a current collector and rolled, the particle itself cracks, and the specific surface area increases. When the specific surface area increases, rock salt is formed on the surface, and the resistance decreases.

To solve this problem, monolithic positive electrode active materials have been additionally developed. Specifically, as opposed to the conventional method using the above-described dense nickel-based lithium transition metal hydroxide secondary particle as a precursor, it is possible to obtain a monolithic nickel-based lithium transition metal oxide that can be synthesized at lower sintering temperature for the same nickel content using a porous precursor and is not in the form of a secondary particle any longer. However, when the positive electrode active material comprising monolith is coated on a current collector and rolled, the monolith itself does not crack, but the other active material may crack.

An aspect of the present disclosure is provided to solve this problem.

When sintering is performed at higher sintering temperature using a dense precursor as conventionally, not only the average particle size D50 of the primary particle but also the average particle size D50 of the secondary particle increases.

In contrast, the secondary particle according to an aspect of the present disclosure is different from the conventional monolith acquisition method as follows.

As described above, the conventional monolith is formed at higher primary sintering temperature using the existing precursor for a secondary particle. In contrast, in the secondary particle according to an aspect of the present disclosure, a porous precursor is separately used. Accordingly, it is possible to grow primary macro particles having a large particle size without increasing the sintering temperature, and by contrast, the secondary particle may less grow than the conventional one.

Accordingly, the secondary particle according to an aspect of the present disclosure has the identical or similar average particle size D50 to the conventional one and a large average particle size D50 of the primary particles. That is, as opposed to the common type of the existing positive electrode active material, i.e., the secondary particle formed by agglomeration of primary particles having a small average particle size, the secondary particle is a secondary particle formed by agglomeration of a predetermined number or less of primary particles having the increased size, i.e., primary macro particles.

When compared with primary micro particles that form the conventional secondary particle, the primary macro particle have simultaneous growth of the average particle size and the average crystallite size of the primary particle.

From the perspective of crack, a seemingly absent grain boundary and a large average particle size like the monolith are advantageous. When only the average particle size D50 of the primary particle is increased by over-sintering, rock salt is formed on the surface of the primary particle and the initial resistance increases. When growing the crystallite size of the primary particle together, the resistance decreases.

Accordingly, in the present disclosure, the primary macro particle is a particle having a large average particle size as well as a large average crystallite size and a seemingly absent grain boundary.

As described above, the simultaneous growth of the average particle size and the average crystallite size of the primary particle reduces the resistance and provides a long life advantage, compared to the monolith having a large resistance increase in the presence of rock salt on the surface due to the sintering at high temperature.

As described above, compared to the monolith, the "secondary particle formed by agglomeration of primary macro particles" used in an aspect of the present disclosure is advantageous in terms of the increased size of the primary particle itself, the reduced rock salt formation and the consequential reduced resistance.

In this instance, the average crystallite size of the primary macro particle may be quantitatively analyzed using X-ray diffraction analysis (XRD) by Cu Kα X-ray. Specifically, the average crystallite size of the primary macro particle may be quantitatively analyzed by putting the prepared particle into a holder and analyzing diffraction grating for X-ray radiation onto the particle.

Additionally, the average crystallite size of the primary macro particle may be 130 nm or more, more particularly 200 nm or more, much more particularly 250 nm or more, and far more particularly 300 nm or more.

Specifically, the secondary particle according to an aspect of the present disclosure refers to an agglomerate of at least two primary macro particle as shown in FIG. 2. In a specific embodiment of the present disclosure, the average particle size D50 of the primary macro particle that forms the secondary particle is 0.1 to 3 *µ*m. When the average particle size D50 of the primary macro particle is smaller than 0.1 *µ*m, the rise in resistance may increase, and when the average particle size D50 of the primary macro particle is larger than 3 *µ*m, the initial resistance may increase and the life characteristics may degrade. Particularly, the average particle size D50 of the primary macro particle may be 0.5 to 3 *µ*m, and more particularly 0.7 to 3 *µ*m.

The primary macro particle is a high-Ni lithium transition metal oxide, and is represented by LiₐNi_{1-x-y}CoₓM1_{y}M2_{w}O₂ (1.0≤a≤1.5, 0≤x≤0.2, 0≤y≤0.2, 0≤w≤0.1, 0≤x+y≤0.2, M1 includes at least one type of metal of Mn or Al, and M2 includes at least one type of metal selected from the group consisting of Ba, Ca, Zr, Ti, Mg, Ta, Nb and Mo). In the above formula, a, x, y and w denote the molar ratio of each element in the nickel-based lithium transition metal oxide.

In this instance, the doped metal M2 in the crystal lattice of the primary particle may be disposed on only part of the surface of the particle depending on the position preference of M2, and or may be positioned with a concentration gradient that decreases in a direction from the particle surface to the center of the particle, or may be uniformly positioned over the entire particle.

### Secondary particle

The secondary particle is a particle formed by agglomeration of at least two primary macro particles, and the average particle size D50 of the secondary particle is 1 to 15 *µ*m. More specifically, the secondary particle may be an agglomerate of 2 to 30 primary macro particles. When the average particle size D50 of the secondary particle is smaller than 1 *µ*m, the life characteristics may degrade, and when the average particle size D50 of the secondary particle is larger than 15 *µ*m, the initial resistance may increase and the life characteristics may degrade. Particularly, the average particle size D50 of the secondary particle may be 3 to 10 *µ*m. More particularly, the average particle size D50 of the secondary particle may be 3 *µ*m or more or 3.5 *µ*m or more, and may be 10 *µ*m or less, 8 *µ*m or less, 7 *µ*m or less, or 5 *µ*m or less.

### Coating layer

The coating layer of lithium-metal oxide is formed on the surface of the secondary particle. Here, the coating layer may be formed on all or part of the surface of the secondary particle and in a gap between the primary particles, and in the present disclosure, it should be interpreted that the coating layer includes these properties.

The lithium-metal oxide is low-temperature phase LiₓCoO₂ (0<x≤1) having at least one of a spinel structure (Fd-3m) or a disordered rock-salt structure (Fm-em).

The lithium cobalt oxide of the above-described structure is formed by reaction between a cobalt source and lithium impurities remaining on the surface of the secondary particle as described below. Accordingly, the amount of lithium impurities is reduced down to, for example, 0.7 weight% or less, and more particularly, 0.5 weight% or less by the change of lithium impurities remaining on the surface to lithium-metal oxide without a washing process for the secondary particle, thereby reducing the phenomenon in which the life characteristics are shortened. The coating layer may be present in an amount of 0.05 to 3 parts by weight based on 100 parts by weight of the secondary particle, and more particularly 0.5 to 2 parts by weight, but is not limited thereto.

### Method for preparing the positive electrode active material

The positive electrode active material according to an aspect of the present disclosure may be prepared by the following method. However, the present disclosure is not limited thereto.

To begin with, a secondary particle having the average particle size D50 of 1 to 15 *µ*m formed by agglomeration of at least two primary macro particles having the average particle size D50 of 0.1 to 3 *µ*m represented by LiₐNi_{1-x-y}CoₓM1_{y}M2_{w}O₂ (1.0≤a≤1.5, 0≤x≤0.2, 0≤y≤0.2, 0≤w≤0.1, 0≤x+y≤0.2, M1 includes at least one type of metal of Mn or Al, and M2 includes at least one type of metal selected from the group consisting of Ba, Ca, Zr, Ti, Mg, Ta, Nb and Mo) is prepared (step S1).

Basically, the step S1 includes (S11) mixing a nickel-based transition metal oxide precursor having the tap density of 2.0 g/cc or less with a lithium precursor, and performing primary sintering; and (S12) performing secondary sintering on the primary sintered product, wherein at least one secondary particle comprising an agglomerate of at least two primary macro particles is prepared through the primary sintering and the secondary sintering.

Each step of the secondary particle preparation method will be described in further detail.

First, a positive electrode active material precursor comprising nickel (Ni), cobalt (Co), M1 and M2 is prepared.

In this instance, the precursor for preparing the positive electrode active material may be a commercially available positive electrode active material precursor, or may be prepared by a method for preparing a positive electrode active material precursor well-known in the corresponding technical field.

For example, the precursor may be prepared by adding an ammonium cation containing chelating agent and a basic compound to a transition metal solution comprising a nickel containing raw material, a cobalt containing raw material and a manganese containing raw material, to cause coprecipitation reaction.

The nickel containing raw material may include, for example, nickel containing acetate, nitrate, sulfate, halide, sulfide, hydroxide, oxide or oxyhydroxide, and specifically, may include at least one of Ni(OH)₂, NiO, NiOOH, NiCO₃ • 2Ni(OH)₂ • 4H₂O, NiC₂O₂ • 2H₂O, Ni(NO₃)₂ • 6H₂O, NiSO₄, NiSO₄ • 6H₂O, an aliphatic acid nickel salt or nickel halide, but is not limited thereto.

The cobalt containing raw material may include cobalt containing acetate, nitrate, sulfate, halide, sulfide, hydroxide, oxide or oxyhydroxide, and specifically, may include at least one of Co(OH)₂, CoOOH, Co(OCOCH₃)₂ • 4H₂O, Co(NO₃)₂ • 6H₂O, CoSO₄ or Co(SO₄)₂ • 7H₂O, but is not limited thereto.

The M1 containing raw material may include, for example, at least one of manganese containing acetate, nitrate, sulfate, halide, sulfide, hydroxide, oxide or oxyhydroxide where M1 is Mn, and specifically, may include, for example, at least one of manganese oxide such as Mn₂O₃, MnO₂, Mn₃O₄; a manganese salt such as MnCO₃, Mn(NO₃)₂, MnSO₄, manganese acetate, a manganese salt of dicarboxylic acid, manganese citrate and an aliphatic acid manganese salt; manganese oxyhydroxide or manganese chloride, but is not limited thereto. The M2 containing raw material may also have a similar structure.

The transition metal solution may be prepared by adding the nickel containing raw material, the cobalt containing raw material and the M1 and M2 containing raw material to a solvent, to be specific, water, or a mixed solvent of water and an organic solvent (for example, alcohol, etc.) that mixes with water to form a homogeneous mixture, or may be prepared by mixing an aqueous solution of the nickel containing raw material, an aqueous solution of the cobalt containing raw material and the M1 and M2 containing raw material.

The ammonium cation containing chelating agent may include, for example, at least one of NH₄OH, (NH₄)₂SO₄, NH₄NO₃, NH₄Cl, CH₃COONH₄ or NH₄CO₃, but is not limited thereto. Meanwhile, the ammonium cation containing chelating agent may be used in the form of an aqueous solution, and in this instance, a solvent may include water or a mixture of water and an organic solvent (specifically, alcohol, etc.) that mixes with water to form a homogeneous mixture.

The basic compound may include at least one of hydroxide or hydrate of alkali metal or alkaline earth metal such as NaOH, KOH or Ca(OH)₂. The basic compound may be used in the form of an aqueous solution, and in this instance, a solvent may include water, or a mixture of water and an organic solvent (specifically, alcohol, etc.) that mixes with water to form a homogeneous mixture.

The basic compound may be added to control the pH of the reactive solution, and may be added in such an amount that the pH of the metal solution is 9 to 11.

Meanwhile, the coprecipitation reaction may be performed at 40°C to 70°C in an inert atmosphere of nitrogen or argon.

Particles of nickel-cobalt-manganese hydroxide are produced by the above-described process, and settle down in the reactive solution. The precursor having the nickel (Ni) content of 60 mol% or more in the total metal content may be prepared by adjusting the concentration of the nickel containing raw material, the cobalt containing raw material and the manganese containing raw material. The settled nickel-cobalt-manganese hydroxide particles are separated by the common method, and dried to obtain a nickel-cobalt-manganese precursor. The precursor may be a secondary particle formed by agglomeration of primary particles.

Subsequently, the above-described precursor is mixed with a lithium raw material and primary sintering is performed.

The lithium raw material may include, without limitation, any type of material that dissolves in water, and may include, for example, lithium containing sulfate, nitrate, acetate, carbonate, oxalate, citrate, halide, hydroxide or oxyhydroxide. Specifically, the lithium raw material may include at least one of Li₂CO₃, LiNO₃, LiNO₂, LiOH, LiOH • H₂O, LiH, LiF, LiCl, LiBr, LiI, CH₃COOLi, Li₂O, Li₂SO₄, CH₃COOLi, or Li₃C₆H₅O₇.

In the case of high-Ni NCM based lithium composite transition metal oxide having the nickel (Ni) content of 80 mol% or more, the primary sintering may be performed at 700 to 1,000°C, more preferably 780 to 980°C, and much more preferably 780 to 900°C. The primary sintering may be performed in air or in an oxygen atmosphere, and may be performed for 10 to 35 hours.

Subsequently, additional secondary sintering may be performed after the primary sintering.

In the case of high-Ni NCM based lithium composite transition metal oxide having the nickel (Ni) content of 80 mol% or more, the secondary sintering may be performed at 650 to 800°C, more preferably 700 to 800°C, and much more preferably 700 to 750°C. The secondary sintering may be performed in air or in an oxygen atmosphere, and the secondary sintering may be performed with an addition of cobalt oxide or cobalt hydroxide at 0 to 20,000 ppm.

Meanwhile, the method may not comprise a washing process between the step (S11) and the step (S12).

Through the above-described process, a positive electrode active material comprising a secondary particle having a predetermined average particle size formed by agglomeration of primary macro particles having a predetermined average particle size may be prepared.

Subsequently, a cobalt source is mixed with the secondary particle and sintering is performed to form a coating layer on the surface of the secondary particle, the coating layer of low-temperature phase LiₓCoO₂ (0<x≤1) having at least one of a spinel structure (Fd-3m) or a disordered rock-salt structure (Fm-em) by reaction between lithium impurities contained on the surface of the secondary particle and the cobalt source (step S2).

Here, the secondary particle used in the step S2 include secondary particles that do not require a washing process. That is, there is no washing process between the step (S1) and the step (S2).

The cobalt source that is mixed with the secondary particle may include at least one selected from the group consisting of cobalt oxide and cobalt hydroxide, and more particularly, at least one selected from the group consisting of CoO, Co₃O₄ and Co(OH)₂, but is not limited thereto. When the cobalt source is mixed, for example, in an amount corresponding to the equivalence ratio (Li:Co = 0.6~1) of lithium impurities remaining on the surface of the secondary particle and sintering is performed at 350 to 500°C for 5 to 40 hours, the coating layer of lithium cobalt oxide having the above-described specific structure is formed on the surface of the secondary particle by the reaction between lithium impurities remaining on the surface of the secondary particle and lithium of the lithium source.

The positive electrode active material for a lithium secondary battery formed by the above-described method may have the lithium impurity content of 0.7 weight% or less.

### Positive electrode and lithium secondary battery

According to another embodiment of the present disclosure, there are provided a positive electrode for a lithium secondary battery and a lithium secondary battery comprising the positive electrode active material.

Specifically, the positive electrode comprises a positive electrode current collector and a positive electrode active material layer comprising the positive electrode active material on the positive electrode current collector.

In the positive electrode, the positive electrode current collector is not limited to a particular type and may include any type of material having conductive properties without causing any chemical change to the battery, for example, stainless steel, aluminum, nickel, titanium, sintered carbon or aluminum or stainless steel treated with carbon, nickel, titanium or silver on the surface. Additionally, the positive electrode current collector may be generally 3 to 500 *µ*m in thickness, and may have microtexture on the surface to improve the adhesion strength of the positive electrode active material. For example, the positive electrode current collector may come in various forms, for example, films, sheets, foils, nets, porous bodies, foams and non-woven fabrics.

In addition to the above-described positive electrode active material, the positive electrode active material layer may include a conductive material and a binder.

In this instance, the conductive material is used to impart conductivity to the electrode, and may include, without limitation, any type of conductive material having the ability to conduct electrons without causing any chemical change to the battery. Specific examples of the conductive material may include at least one of graphite, for example, natural graphite or artificial graphite; carbon-based materials, for example, carbon black, acetylene black, ketjen black, channel black, furnace black, lamp black, thermal black and carbon fibers; metal powder or metal fibers, for example, copper, nickel, aluminum and silver; conductive whiskers, for example, zinc oxide and potassium titanate; conductive metal oxide, for example, titanium oxide; or conductive polymers, for example, polyphenylene derivatives. In general, the conductive material may be included in an amount of 1 to 30 weight% based on the total weight of the positive electrode active material layer.

Additionally, the binder serves to improve the bonds between the positive electrode active material particles and the adhesion strength between the positive electrode active material and the positive electrode current collector. Specific examples of the binder may include at least one of polyvinylidene fluoride (PVDF), polyvinylidene fluoride-hexafluoropropylene copolymer (PVDF-co-HFP), polyvinylalcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or a variety of copolymers thereof. The binder may be included in an amount of 1 to 30 weight% based on the total weight of the positive electrode active material layer.

The positive electrode may be manufactured by the commonly used positive electrode manufacturing method except using the above-described positive electrode active material. Specifically, the positive electrode may be manufactured by coating a positive electrode active material layer forming composition comprising the positive electrode active material and optionally, the binder and the conductive material on the positive electrode current collector, drying and rolling. In this instance, the type and amount of the positive electrode active material, the binder and the conductive material may be the same as described above.

The solvent may include solvents commonly used in the corresponding technical field, for example, at least one of dimethyl sulfoxide (DMSO), isopropyl alcohol, N-methylpyrrolidone (NMP), acetone or water. The solvent may be used in such an amount to have sufficient viscosity for good thickness uniformity when dissolving or dispersing the positive electrode active material, the conductive material and the binder and coating to manufacture the positive electrode in view of the slurry coating thickness and the production yield.

Alternatively, the positive electrode may be manufactured by casting the positive electrode active material layer forming composition on a support, peeling off a film from the support and laminating the film on the positive electrode current collector.

According to still another embodiment of the present disclosure, there is provided an electrochemical device comprising the positive electrode. Specifically, the electrochemical device may include a battery or a capacitor, and more specifically, a lithium secondary battery.

Specifically, the lithium secondary battery comprises a positive electrode, a negative electrode opposite the positive electrode, a separator between the positive electrode and the negative electrode and an electrolyte, and the positive electrode is the same as described above. Additionally, optionally, the lithium secondary battery may further comprise a battery case accommodating an electrode assembly comprising the positive electrode, the negative electrode and the separator is received, and a sealing member to seal up the battery case.

In the lithium secondary battery, the negative electrode comprises a negative electrode current collector and a negative electrode active material layer on the negative electrode current collector.

The negative electrode current collector may include any type of material having high conductivity without causing any chemical change to the battery, for example, copper, stainless steel, aluminum, nickel, titanium, sintered carbon, copper or stainless steel treated with carbon, nickel, titanium or silver on the surface and an aluminum-cadmium alloy, but is not limited thereto. Additionally, the negative electrode current collector may be generally 3 to 500 *µ*m in thickness, and in the same way as the positive electrode current collector, the negative electrode current collector may have microtexture on the surface to improve the bonding strength of the negative electrode active material. For example, the negative electrode current collector may come in various forms, for example, films, sheets, foils, nets, porous bodies, foams and non-woven fabrics.

In addition to the negative electrode active material, the negative electrode active material layer optionally comprises a binder and a conductive material. For example, the negative electrode active material layer may be formed by coating a negative electrode forming composition comprising the negative electrode active material, and optionally the binder and the conductive material on the negative electrode current collector and drying, or by casting the negative electrode forming composition on a support, peeling off a film from the support and laminating the film on the negative electrode current collector.

The negative electrode active material may include compounds capable of reversibly intercalating and deintercalating lithium. Specific examples of the negative electrode active material may include at least one of a carbonaceous material, for example, artificial graphite, natural graphite, graphitizing carbon fibers, amorphous carbon; a metallic material that can form alloys with lithium, for example, Si, Al, Sn, Pb, Zn, Bi, In, Mg, Ga, Cd, Si alloy, Sn alloy or Al alloy; metal oxide capable of doping and undoping lithium such as SiOβ (0 < β < 2), SnO₂, vanadium oxide, lithium vanadium oxide; or a complex comprising the metallic material and the carbonaceous material such as a Si-C complex or a Sn-C complex. Additionally, a metal lithium thin film may be used for the negative electrode active material. Additionally, the carbon material may include low crystalline carbon and high crystalline carbon. The low crystalline carbon typically includes soft carbon and hard carbon, and the high crystalline carbon typically includes high temperature sintered carbon, for example, amorphous, platy, flaky, spherical or fibrous natural graphite or artificial graphite, Kish graphite, pyrolytic carbon, mesophase pitch based carbon fiber, meso-carbon microbeads, mesophase pitches and petroleum or coal tar pitch derived cokes.

Additionally, the binder and the conductive material may be the same as those of the positive electrode described above.

Meanwhile, in the lithium secondary battery, the separator separates the negative electrode from the positive electrode and provides a passage for movement of lithium ions, and may include, without limitation, any separator commonly used in lithium secondary batteries, and in particular, preferably the separator may have low resistance to the electrolyte ion movement and good electrolyte solution wettability. Specifically, the separator may include, for example, a porous polymer film made of polyolefin-based polymer such as ethylene homopolymer, propylene homopolymer, ethylene/butene copolymer, ethylene/hexene copolymer and ethylene/methacrylate copolymer or a stack of two or more porous polymer films. Additionally, the separator may include common porous non-woven fabrics, for example, non-woven fabrics made of high melting point glass fibers and polyethylene terephthalate fibers. Additionally, to ensure the heat resistance or mechanical strength, the coated separator comprising ceramics or polymer materials may be used, and may be selectively used with a single layer or multilayer structure.

Additionally, the electrolyte used in the present disclosure may include an organic liquid electrolyte, an inorganic liquid electrolyte, a solid polymer electrolyte, a gel polymer electrolyte, a solid inorganic electrolyte and a molten inorganic electrolyte, available in the manufacture of lithium secondary batteries, but is not limited thereto.

Specifically, the electrolyte may comprise an organic solvent and a lithium salt.

The organic solvent may include, without limitation, any type of organic solvent that acts as a medium for the movement of ions involved in the electrochemical reaction of the battery. Specifically, the organic solvent may include an ester-based solvent, for example, methyl acetate, ethyl acetate, γ-butyrolactone, ε-caprolactone; an ether-based solvent, for example, dibutyl ether or tetrahydrofuran; a ketone-based solvent, for example, cyclohexanone; an aromatic hydrocarbon-based solvent, for example, benzene, fluorobenzene; a carbonate-based solvent, for example, dimethylcarbonate (DMC), diethylcarbonate (DEC), methylethylcarbonate (MEC), ethylmethylcarbonate (EMC), ethylene carbonate (EC), propylene carbonate (PC); an alcohol-based solvent, for example, ethylalcohol, isopropyl alcohol; nitriles of R-CN (R is C2 to C20 straight-chain, branched-chain or cyclic hydrocarbon, and may comprise an exocyclic double bond or ether bond); amides, for example, dimethylformamide; dioxolanes, for example, 1,3-dioxolane; or sulfolanes. Among them, the carbonate-based solvent is desirable, and more preferably, cyclic carbonate (for example, ethylene carbonate or propylene carbonate) having high ionic conductivity and high dielectric constant which contributes to the improved charge/discharge performance of the battery may be mixed with a linear carbonate-based compound (for example, ethylmethyl carbonate, dimethyl carbonate or diethyl carbonate) of low viscosity. In this case, the cyclic carbonate and the chain carbonate may be mixed at a volume ratio of about 1:1 to about 1:9 to improve the performance of the electrolyte solution.

The lithium salt may include, without limitation, any compound that can provide lithium ions used in lithium secondary batteries. Specifically, the lithium salt may include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt may range from 0.1 to 2.0M. When the concentration of the lithium salt is included in the above-described range, the electrolyte has the optimal conductivity and viscosity, resulting in good performance of the electrolyte and effective movement of lithium ions.

In addition to the above-described constituent substances of the electrolyte, the electrolyte may further comprise, for example, at least one type of additive of a haloalkylene carbonate-based compound such as difluoro ethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride to improve the life characteristics of the battery, prevent the capacity fading of the battery and improve the discharge capacity of the battery. In this instance, the additive may be included in an amount of 0.1 to 5 weight% based on the total weight of the electrolyte.

The lithium secondary battery comprising the positive electrode active material according to the present disclosure is useful in the field of mobile devices including mobile phones, laptop computers and digital cameras, and electric vehicles including hybrid electric vehicles (HEVs).

Accordingly, according to another embodiment of the present disclosure, there are provided a battery module comprising the lithium secondary battery as a unit cell and a battery pack comprising the same.

The battery module or the battery pack may be used as a power source of at least one medium-large scale device of power tools; electric vehicles comprising electric vehicles (EVs), hybrid electric vehicles, and plug-in hybrid electric vehicles (PHEVs); or energy storage systems.

Hereinafter, the embodiments of the present disclosure will be described in sufficiently detail for those having ordinary skill in the technical field pertaining to the present disclosure to easily practice the present disclosure. However, the present disclosure may be embodied in many different forms and is not limited to the disclosed embodiments.

### Example 1.

### Preparation of secondary particle

A nickel-cobalt-manganese containing hydroxide (Ni_{0.8}Co_{0.1}Mn_{0.1}(OH)₂) positive electrode active material precursor having the tap density of 1.6 g/cc and a lithium raw material LiOH are put into Henschel mixer (700L) such that the final Li/M(Ni,Co,Mn) molar ratio is 1.1, and mixed at 300 rpm core for 20 minutes. The mixed powder is put into an alumina furnace of 330 mmx330 mm size and sintered at 880°C for 10 hours under an oxygen (O₂) atmosphere to form a sintered product.

Subsequently, the sintered product is ground using a jet mill under 80 psi feeding and 60 psi grinding to prepare a secondary particle.

### Formation of coating layer

The secondary particle (an amount of lithium remaining on the surface before coating is about 1.2 weight%) is put into an alumina furnace of 330mmx330mm size, Co(OH)₂ is added at an equivalence ratio (1:1) with residual lithium and sintering is performed at 400°C for 20 hours under an oxygen (O₂) atmosphere to form a coating layer on the secondary particle, so as to prepare a positive electrode active material for a lithium secondary battery.

### Comparative example 1

A positive electrode active material in the form of a secondary particle is prepared by the same process as example 1 except that a coating layer is not formed.

The properties of the positive electrode active material for a lithium secondary battery of example and comparative example are as follows.

**[Table 1]**

| | Sample | Unit | example 1 | Comparative example 1 |
|---|---|---|---|---|
| Secondary particle | Average particle size (D50) | µm | 3.8 | 3.8 |
| | Average particle size (D50) of primary particle | µm | 0.8 | 0.8 |
| | Average crystallite size of primary particle | nm | 250 | 250 |
| | Amount of remaining lithium impurities | weight% | 0.3 | 1.2 |
| Coating layer | Amount (based on 100 parts by weight of secondary particle) | parts by weight | 1 | 0 |
| Positive electrode active material for lithium secondary battery | Amount of remaining lithium impurities | weight% | 0.3 | 1.2 |

### [Experimental example 1: Observation of positive electrode active material]

FIG. 1 is a scanning electron microscope (SEM) image of the conventional secondary particle having the average particle size D50 of 5 *µ*m, formed by agglomeration of primary micro particles.

The positive electrode active material of example 1 observed at magnification using an SEM is shown in FIG. 2.

### [Experimental example 2: Average particle size]

D50 may be defined as a particle size at 50% of particle size distribution, and is measured using a laser diffraction method.

### [Experimental example 3: Crystallite size of primary particle]

The sample is measured using Bruker Endeavor (Cu Kα, λ= 1.54 A°) equipped with LynxEye XE-T position sensitive detector with the step size of 0.02° in the scan range of 90° FDS 0.5°, 2-theta 15°, to make the total scan time of 20 min.

Rietveld refinement of the measured data is performed, considering the charge at each site (metals at transition metal site +3, Ni at Li site +2) and cation mixing. In crystallite size analysis, instrumental broadening is considered using Fundamental Parameter Approach (FPA) implemented in Bruker TOPAS program, and in fitting, all peaks in the measurement range are used. The peak shape fitting is only performed using Lorentzian contribution to First Principle (FP) among peak types available in TOPAS, and in this instance, strain is not considered. The crystallite size results are shown in the above Table 1.

### [Experimental example 4: C distribution of positive electrode active material particles for lithium secondary battery and TEM SAED pattern of coating layer]

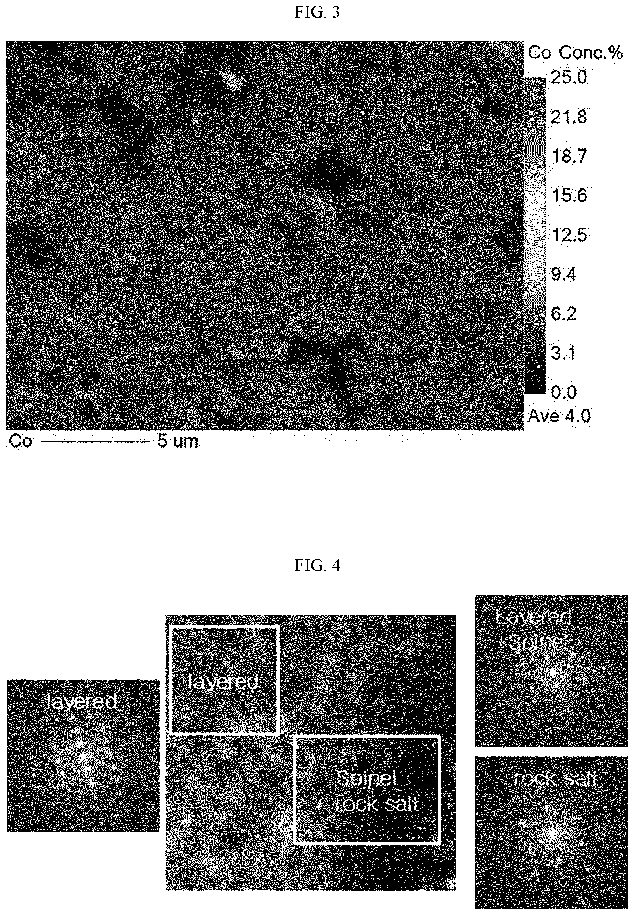

An EPMA image of Co distribution of the positive electrode active material particles for a lithium secondary battery prepared according to example 1 is shown in FIG. 3.

A TEM SAED pattern of the coating layer of the positive electrode active material for a lithium secondary battery prepared according to example 1 is shown in FIG. 4.

### [Experimental example 5. Life characteristics]

A lithium secondary battery half cell manufactured as below using the positive electrode active material prepared in each of example 1 and comparative example 1 is charged at 1C, 45°C in a CC-CV mode until 4.25V and discharged at a constant current of 0.5 C until 2.5V, and the capacity retention is measured in 50 cycles of charge/discharge test to evaluate life characteristics.

Specifically, the lithium secondary battery half cell is manufactured as below.

The positive electrode active material prepared in each of example 1 and comparative example 1, a carbon black conductive material and a PVdF binder are mixed in an N-methyl pyrrolidone solvent at a weight ratio of 96:2:2 to prepare a positive electrode mixture, and the positive electrode mixture is coated on one surface of an aluminum current collector, followed by drying at 100°C and rolled to manufacture a positive electrode.

For a negative electrode, lithium metal is used.

An electrode assembly including the positive electrode and the negative electrode manufactured as described above and a porous polyethylene separator between the positive electrode and the negative electrode is made and placed in a case, and an electrolyte solution is injected into the case to manufacture a lithium secondary battery. In this instance, the electrolyte solution is prepared by dissolving 1.0M lithiumhexafluorophosphate (LiPF₆) in an organic solvent comprising ethylenecarbonate/ethylmethylcarbonate/diethylcarbonate/(a mix volume ratio of EC/EMC/DEC=3/4/3).

### [Experimental example 6. Resistance characteristics at SOC 10-90]

After one charge and one discharge at 0.2C/0.2C, SOC is set at 0.2C, and then the current is applied at 2.5C for 10 seconds and the resistance is measured through changes in voltage after the current is applied at 2.5C.

## Claims

1. A positive electrode active material for a lithium secondary battery, comprising:
a secondary particle having an average particle size (D50) of 1 to 15 *µ*m, formed by agglomeration of at least two primary macro particles having an average particle size (D50) of 0.1 to 3 *µ*m; and
a coating layer of a lithium-metal oxide on a surface of the secondary particle,
wherein the primary macro particles are represented by LiₐNi_{1-x-y}CoₓM1_{y}M2_{w}O₂ (1.0≤a≤1.5, 0≤x≤0.2, 0≤y≤0.2, 0≤w≤0.1, 0≤x+y≤0.2, M1 includes at least one type of metal of Mn or Al, and M2 includes at least one type of metal selected from the group consisting of Ba, Ca, Zr, Ti, Mg, Ta, Nb and Mo), and
wherein the lithium-metal oxide is a low-temperature phase Li_{x'}CoO₂ (0<x≤1) having at least one of a spinel structure (Fd-3m) or a disordered rock-salt structure (Fm-em).

2. The positive electrode active material for a lithium secondary battery according to claim 1, wherein the lithium-metal oxide has the spinel structure (Fd-3m).

3. The positive electrode active material for a lithium secondary battery according to claim 1, wherein the average particle size (D50) of the primary macro particles is 1 to 3 *µ*m, and the average particle size (D50) of the secondary particle is 3 to 10 *µ*m.

4. The positive electrode active material for a lithium secondary battery according to claim 1, wherein the coating layer is present in an amount of 0.05 to 3 parts by weight based on 100 parts by weight of the secondary particle.

5. The positive electrode active material for a lithium secondary battery according to claim 1, wherein an average crystallite size of the primary macro particles is 130 nm or more.

6. The positive electrode active material for a lithium secondary battery according to claim 1, wherein a lithium impurity of the positive electrode active material for a lithium secondary battery is present in an amount of 0.7 weight% or less.

7. A method for preparing a positive electrode active material for a lithium secondary battery, comprising:
(S1) preparing a secondary particle having an average particle size (D50) of 1 to 15 *µ*m, formed by agglomeration of at least two primary macro particles having an average particle size (D50) of 0.1 to 3 *µ*m, represented by LiₐNi_{1-x-y}CoₓM1_{y}M2_{w}O₂ (1.0≤a≤1.5, 0≤x≤0.2, 0≤y≤0.2, 0≤w≤0.1, 0≤x+y≤0.2, M1 includes at least one type of metal of Mn or Al, and M2 includes at least one type of metal selected from the group consisting of Ba, Ca, Zr, Ti, Mg, Ta, Nb and Mo); and
(S2) mixing a cobalt source with the secondary particle and sintering to form a coating layer on a surface of the secondary particle, the coating layer of a low-temperature phase LiₓCoO₂ (0<x≤1) having at least one of a spinel structure (Fd-3m) or a disordered rock-salt structure (Fm-em), formed by reaction between a lithium impurity contained on the surface of the secondary particle and the cobalt source,
wherein the method does not comprise a washing process between the step (S1) and the step (S2).

8. The method for preparing a positive electrode active material for a lithium secondary battery according to claim 7, wherein the average particle size (D50) of the primary macro particles is 1 to 3 *µ*m, and the average particle size (D50) of the secondary particle is 3 to 10 *µ*m.

9. The method for preparing a positive electrode active material for a lithium secondary battery according to claim 7, wherein the cobalt source includes at least one selected from the group consisting of a cobalt oxide and a cobalt hydroxide.

10. The method for preparing a positive electrode active material for a lithium secondary battery according to claim 7, wherein the cobalt source includes at least one selected from the group consisting of CoO, Co₃O₄ and Co(OH)₂.

11. The method for preparing a positive electrode active material for a lithium secondary battery according to claim 7, wherein the cobalt source is mixed at an equivalence ratio of Li:Co of 0.6 to 1 with an amount of lithium contained in the lithium impurity.

12. The method for preparing a positive electrode active material for a lithium secondary battery according to claim 7, wherein the lithium impurity of the positive electrode active material for a lithium secondary battery is present in an amount of 0.7 weight% or less.

13. A positive electrode for a lithium secondary battery comprising the positive electrode active material according to any one of claims 1 to 6.

14. A lithium secondary battery comprising the positive electrode according to claim 13.
